# EUROPEAN PATENT SPECIFICATION

(11) **EP 3 880 117 B1**
(45) Date of publication and mention of the grant of the patent: **04.10.2023**
(21) Application number: 19821202.9
(22) Date of filing: 15.11.2019
(51) Int. Cl.: A61C 8/00

(54) **DENTAL IMPLANT**
ZAHNIMPLANTAT
IMPLANT DENTAIRE

(30) Priority: 15.11.2018 IT 201800010367; 04.03.2019 IT 201900003117
(43) Date of publication of application: 22.09.2021
(73) Proprietor: GASPARON, Ugo, 36016 Thiene (VI) (IT); Busin, Marco, 36015 Schio (VI) (IT)
(72) Inventor: GASPARON, Ugo, 36016 Thiene (VI) (IT); Busin, Marco, 36015 Schio (VI) (IT)
(74) Representative: Feltrinelli, Secondo Andrea
(86) International application number: PCT/IB2019/059837
(87) International publication number: WO 2020/100106

(56) References cited:
- EP-A1- 0 216 031
- EP-A2- 0 288 702
- WO-A1-2019/214773
- WO-A2-2012/142517
- US-A- 5 302 125

## Description

### TECHNICAL FIELD OF THE INVENTION

The present invention regards an endosseous dental implant that can be constrained to a mandibular or maxillary portion, to which an artificial tooth can be connected.

### STATE OF THE ART

As is known, for the resolution of dental problems, dental prostheses can be used, i.e. elements made of ceramic material or other biocompatible material which substitute the original lost or compromised teeth for functional or aesthetic reasons.

Dental prostheses can be of removable or fixed type.

Fixed dental prostheses can be constrained to the mandible or to the jaw of the patient by means of a suitable coupling screw - dental implant - which is surgically inserted in a site made in the identified bone portion.

The dental implant, i.e. the coupling screw, has a cylindrical form bearing two threads at the opposite ends: a first thread adapted to be engaged in the bone site and a second thread engageable by a dental prosthesis - artificial tooth - so as to constrain the prosthesis to the dental implant and, hence, to the bone.

The coupling screw can have a first portion bearing the first thread which is extended along an axis that is tilted with respect to that of the second portion bearing the second thread, in order to allow the use of the implant if it is necessary to make a site which is extended along an axis tilted with respect to that of installation of the artificial tooth.

For such purpose, it is known to make implants which have a coupling screw provided with a first portion and with a second portion tilted with respect to each other. Nevertheless, in order to limit the production costs, the available tilt between the first portion and the second portion is limited to several pre-established angles.

In fact, one such solution limits the flexibility of use of a similar dental implant, since in particularly complex cases it is necessary to make an implant with a specific geometry, with consequent increased costs for the patient, or there is the need to redefine the surgical intervention, reaching a compromise between the bone morphology of the implant site and the configurations of the implants normally available on the market.

There is the need in the field to provide for a dental implant with flexible use that can be easily adaptable to the morphology of the implant site.

A similar implant, moreover, must be easy to use in order to facilitate its use and installation by a surgeon.WO2012142517A2 discloses an implant device belonging to the state of the art.

### OBJECTS OF THE INVENTION

Therefore, the main object of the present invention is to improve the state of the art relative to a dental implant.

In the scope of such task, one object of the present invention is to provide an adjustable dental implant suitable to be adapted to the specific morphology of the implant site.

Another object of the present invention is to provide a dental implant which is easily implantable in a suitable mandibular or maxillary bone site, independent of the position/tilt of such site.

A further object of the present invention is to provide a dental implant configured for preventing the formation of bacterial proliferation areas, food or plaque accumulation areas in the implant site.

Another object of the present invention is to provide a dental implant with extremely flexible use and with high structural strength.

In accordance with one aspect of the present invention, a dental implant is provided according to claim 1.

The dependent claims refer to preferred and advantageous embodiments of the invention.

### BRIEF DESCRIPTION OF THE DRAWINGS

Further characteristics and advantages of the present invention will be more evident from the detailed description of a preferred but not exclusive embodiment of a dental implant, illustrated by way of a non-limiting example in the enclosed drawing tables in which:
figure 1 is a perspective view a dental implant according to an embodiment not belonging to the present invention;
figure 2 is a front view of a possible configuration of the dental implant according to an embodiment not belonging to the present invention;
figure 3 is a top exploded view of a dental implant according to an embodiment not belonging to the present invention;
figure 4 is a bottom exploded view of the dental implant pursuant to figure 3;
figure 5 is a front view, in partial section, of a further version of the dental implant according to an embodiment not belonging to the present invention;
figure 6 is a perspective view of a version of the dental implant according to the present invention;
figure 7 is a side section view, along the section plane VI, of the dental implant pursuant to figure 6;
figures 8 to 10 are perspective view of several component of the dental implant pursuant to figure 6;
figures 11 to 13 are perspective views of a version of the dental implant according to an embodiment not belonging to the present invention;
figure 14 is a perspective view of a further version of the dental implant according to the present invention;
figures 15 and 16 are, respectively, a perspective view and a section view of the abutment of the implant of figure 14;
figure 17 is a perspective view of the connection element 226 of the implant of figure 14;
figures 18 and 19 are, respectively a top view and a side view of the anchorage body of the implant of figure 14,
figure 20 is a section view taken along the trace XX-XX of figure 19;
figure 21 is a perspective view of a further version of the dental implant according to the present invention;
figure 22 is a section view taken along the trace XXII-XXII of figure 19;
figures 23 to 26 illustrate details of the implant of figure 21;
figure 27 is a front view of a further version of part of the dental implant according to the present invention;
figure 28 is a section view taken along the trace XXVIII-XXVIII of figure 27;
figure 29 is a perspective view of the implant of figure 27;
figure 30 is a perspective view of a component of the implant of figure 27 to be inserted in the bone of a patient.

In the enclosed drawings, equivalent parts or components are marked with the same reference numbers.

### EMBODIMENTS OF THE INVENTION

With reference to the enclosed figures, a dental implant according to an embodiment not belonging to the present invention is overall indicated with reference number 1.

The dental implant 1 comprises an anchorage body 2, in order to constrain the dental implant 1 itself to a mandibular or maxillary portion of a patient, and an abutment 3, also known as "abutment", to which a dental crown or artificial tooth is connected, not illustrated in the enclosed figures.

The connection between the dental crown or artificial tooth and the abutment 3 can occur according to modes known in the field, for example by means of the use of cement or a conical coupling, screwing, etc.

The abutment 3 identifies an axis 4 of installation of a dental crown or artificial tooth.

The anchorage body 2 and the abutment 3 are operatively connected to each other by means of a spherical connection, as better indicated hereinbelow.

The anchorage body 2 has a stem 5, which is extended along a longitudinal axis 6 of the anchorage body 2 itself and which defines the surgical axis of insertion of the implant.

The stem 5 bears a thread 7, in order to facilitate the screwing of the anchorage body 2 in a suitably arranged mandibular or maxillary bone site, and a head portion 8, with which the abutment 3 is associable.

In fact, the head portion 8 is provided at one end of the stem 5 in a position opposite the thread 7.

The head portion 8 is spherically configured or it is substantially spherical.

Preferably, the head portion 8 is made of a single body with the stem 5, in a manner so as to avoid the presence of junctions at the connection between the abutment 3 and the anchorage body 2, at whose interior bacterial colonies, food residues, plaque, etc could be accumulated.

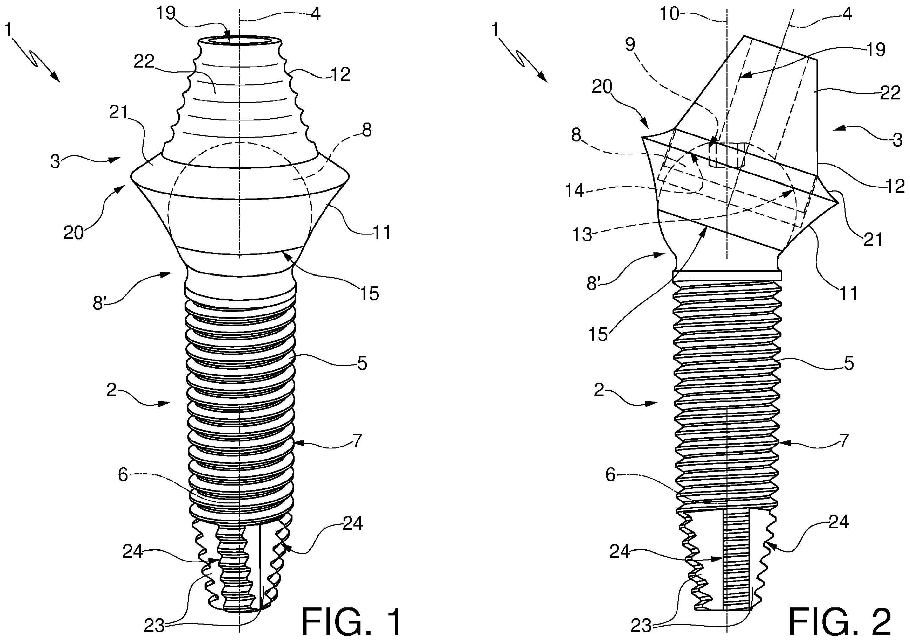

The anchorage body 2 can have a connection portion between the head portion 8 and the stem 5, configured as a continuous surface, lacking edges (see for example figures 1 and 2).

According to a further version of embodiment not belonging to the present invention, not illustrated in the enclosed figures, the head portion 8 can be removably connected to the anchorage body 2, in accordance with a solution lacking discontinuities at the connection between such elements for the above-described aims.

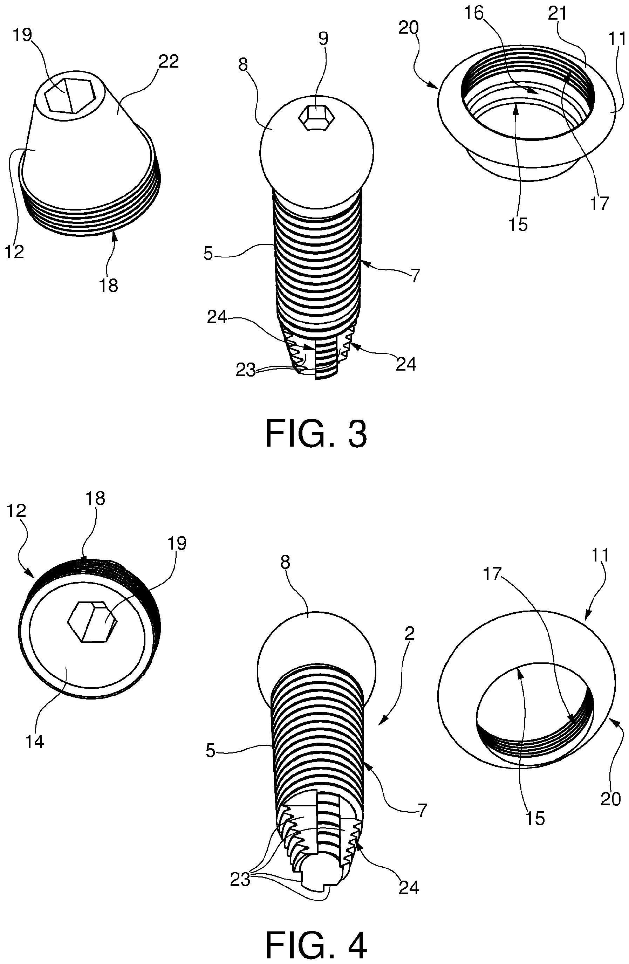

The head portion 8 has a shaped slot 9, placed at its top, which acts as site engageable by a tool usable for screwing the anchorage body 2 in the bone site (see figures 2 and 3).

By way of a non-limiting example, the shaped slot 9 can be of hexagonal type. It is intended that the shaped slot 9 can have further shapes while.

In particular, it is observed that the shaped slot 9 is centrally made on the head portion 8.

The head portion 8 has a central symmetry axis 10 which can coincide with the longitudinal axis 6 of the stem 5 (see figure 2). Further embodiments, not illustrated in the enclosed figures, are nevertheless possible in which the central symmetry axis 10 does not coincide with the longitudinal axis 6 of the stem 5, thus conferring a further degree of adjustment to dental implant 1.

The abutment 3 is operatively connectable to the head portion 8 by means of a spherical coupling.

The abutment 3 comprises an annular element 11 and a support or abutment element 12 which can be mutually connected, adapted to define a site 13 configured as a part of a sphere adapted to house at least one part of the head portion 8.

The support element 12 has a frustoconical progression or a substantially frustoconical progression.

The support element 12 has an internal cavity 14 shaped as a sphere part with a diameter equal to or substantially equal to that of the head portion 8 of the anchorage body 2 (see figure 4).

Analogously, the annular element 11 delimits a central opening 15 which defines a shaped site 16 corresponding to a part of a sphere of the same diameter or substantially of the same diameter as that of the head portion 8 of the anchorage body 2.

As stated above, the annular element 11 and the support element 12 can be mutually connected by means of a threaded connection.

For such purpose, it is observed that the annular element 11 has an internal thread 17 engageable by a corresponding external thread 18 made along a portion of the support element 12.

In particular, it is observed that the internal thread 17 is extended at a portion of said annular element 11 placed on the upper part of the shaped site 16.

Therefore, the annular element 11 and the support element 12 are mutually connectable by means of a threaded coupling.

The support element 12 has a central opening 19 which is extended passing through the support element 12 itself. The central opening 19 is centrally made with respect to the support element 12.

The central opening 19 can be shaped in order to be engageable by a tool and thus allow the tightening of the support element 12 with respect to the annular element 11.

In the enclosed figures 3 and 4, the central opening 19 is illustrated hexagonal. It is intended that the central opening 19 can be differently shaped while falling within the same inventive concept not belonging to of the present invention.

By way of a non-limiting example, the central opening 19 can be configured square, triangular, elliptical or the like, without any limitation.

In fact, by screwing the support element 12 to the annular element 11, one delimits the site 13 configured as a sphere part, whose volume can be varied as a function of the mutual screwing level between such elements.

Initially, the site 13 can have an internal diameter equal or substantially equal to that of the head portion 8, in order to allow the mobility of the abutment 3 relative to the anchorage body 2.

Consequently, it is possible to vary the tilt of the axis 4 of the abutment 3 with respect to the longitudinal axis 6 of the stem 5 and/or with respect to the central symmetry axis 10 of the head portion 8 substantially with any spatial tilt.

By screwing the support element 12 with respect to the annular element 11, one reduces the volume of the site 13, bringing the support element 12 progressively in abutment against the head portion 8. Indeed, the annular element 11 is drawn against the head portion 8, blocking the mobility of the abutment 3 with respect to the anchorage body 2.

Following the tightening of the support element 12 and of the annular element 11 against the head portion 8, one constrains the abutment 3 to the latter in a pre-established position.

The central opening 19 also delimits a passage for accessing the shaped slot 9 made at the head portion 8.

The central opening 19 allows screwing the anchorage body 2 in the respective bone implant site, with the abutment 3 associated with the anchorage body 2, facilitating the use of the dental implant 1 as well as its insertion in the predefined bone site.

The spherical connection between the abutment 3 and the anchorage body 2 allows adjusting the tilt of the axis 4 of the abutment 3 substantially in any position relative to the longitudinal axis 6 of the anchorage body 2 and to the central symmetry axis 10 of the head portion 8, conferring a high flexibility of use of the dental implant 1 according to an embodiment not belonging to the present invention.

The annular element 11 is configured for housing and retaining at its interior at least one part of the head portion 8 of the anchorage body 2.

More in detail, it is observed that the central opening 15 of the annular element 11 has a diameter greater than the diameter of the stem 5 of the anchorage body 2, in order to allow introducing the anchorage body 2 through the annular element 11, but less than the diameter of the head portion 8, so as to retain the same within the annular element 11.

The annular element 11 can then be constrained to the head portion 8 by means of the support element 12 which, once screwed to the annular element 11, retains at least one part of the head portion 8 within the site 13 delimited by the annular element 11 and by the support element 12 themselves.

It is observed that with the abutment 3 associated with the anchorage body 2, at least one part 8' of the head portion 8 is extended below the abutment 3 (see figures 1 and 2).

In fact, it is possible to tilt the axis 4 of the abutment 5 with a tilt angle comprised in a wide value interval.

By way of example, such value interval can be comprised between 0 and 35°, even if it is intended that wider intervals are possible, equally falling within the same concept of the present invention.

Such flexibility of use would not be possible if the head portion 8 was entirely housed within the site 13, since the annular element 11 - following the movement of the abutment 3 - would interfere with the stem 5.

According to one version of an embodiment not belonging to the present invention, the annular element 11 can have an upper portion 20 which is extended outside the abutment 3, beyond the planar bulk of the support element 12.

The upper portion 20 defines at least one abutment surface 21 (see figures 1 and 2) which acts as barrier for retaining a possible glue or cement usable for permanently constraining a dental crown or artificial tooth to the support element 12.

The upper portion 20 can also act as a grip portion for retaining the annular element 11 during its tightening with the support element 12.

For such purpose, the annular element 11 can comprise slots or flattened portions, not illustrated in the enclosed figures, made along a side portion of the annular element 11 itself, in order to facilitate the gripping thereof during the tightening with the support element 12.

The support element 12 has a configuration with a conical progression and has a lateral surface 22 that can be coupled to a dental crown or artificial tooth.

More in detail, with reference to that illustrated in the enclosed figure 1, the lateral surface 22 has a specific finish or shape adapted to effectively retain the cement usable for connecting a dental crown to the abutment 3.

For such purpose, according to a preferred embodiment, the lateral surface 22 can have a corrugated, knurled or wrinkled finish.

It is observed that in the enclosed figures 2 and 3, the overall bulk of the lateral surface 22 has been illustrated, suitably canceling the presence of knurling (relief and depression elements).

The support element 12 has a bulk in plan view smaller than that of the annular element 11, with reference in particular to the upper portion 20 of the latter.

In fact, with the support element 12 connected to the annular element 11, the lateral surface 22 is comprised in the planar bulk of the annular element 11.

Such configuration is particularly useful if the use of a glue or a cement has been provided for ensuring the stable connection between the support element 12 and a dental crown since, as stated above, the upper portion 20 acts as barrier in order to prevent such glue or cement from slipping beyond the annular element 11 and affecting further portions of the dental implant 1.

According to an embodiment not belonging to the present invention, the stem 5 can be of self-threading type.

According to such version, the stem 5 can have at the lower end, opposite the head portion 8, some cavities 23 symmetrically arranged around the longitudinal axis 6. Each cavity 23 is extended starting from the free end of the stem 5 along a section of the thread 7 and defines at least one cutting edge or surface 24 which is extended along the cavity 23 itself. The cutting edge or surface 24 can be tilted in order to facilitate the removal of bone fragments, of reduced size, from the cavity 23 itself during the screwing of the anchorage body 2 in the implant bone site. The dental implant 1 according to an embodiment not belonging to the present invention has a high flexibility of use, in the scope of a solution with a reduced number of components and with facilitated use.

The abutment 3, in fact, can be substantially positioned with any tilt with respect to the stem 5 of the anchorage body 2 with which it is associated.

A brief description of the operation of the dental implant 1 is reported hereinbelow.

A dental implant 1 is provided comprising an anchorage body 2 operatively associated with an abutment 3.

In particular, the head portion 8 of the anchorage body 2 is interposed and retained, even if movable between an annular element 11 and a support element 12. The latter are coupled together.

Then, after having identified and prepared the mandibular or maxillary bone site with which the dental implant 1 is to be constrained, the surgeon proceeds by introducing the free end of the anchorage body 2 in such site.

Subsequently, the surgeon screws the anchorage body 2 in the bone site, driving the anchorage body 2 itself in rotation around the longitudinal axis 6, by using a suitable tool engaged in the shaped slot 9 of the head portion 8.

Such shaped slot 9 is accessible through the central opening 19.

Initially, the abutment 3 is movable with respect to the anchorage body 2.

Once the insertion step of the anchorage body 2 has terminated, the abutment 3 is adjusted in the pre-established implant position and such elements are mutually tightened, with a pre-established tightening force, in order to firmly block in position the abutment 3 itself relative to the anchorage body 2.

Following the tightening of the support element 12 with respect to the annular element 11, the internal cavity 14 of the support element 12 is brought into abutment, at least partially, with a corresponding part of the head portion 8 of the anchorage body 2.

In fact, by bringing the internal cavity 14 in abutment against the head portion 8, and further tightening the support element 12 with respect to the annular element 11, the latter is tightened against the head portion 8.

More precisely, the shaped site 16 present in the annular element 11 is tightened against the head portion 8 by exerting an opposite stress with respect to that of the internal cavity 14, actually retaining the head portion 8 itself between the support element 12 and the annular element 11.

The abutment 3 then acts as tightening element adapted to house, within its site 13, at least one part of the head portion 8 and to retain it firmly in position, thus constraining the abutment 3 itself in a specific position relative to the anchorage body 2.

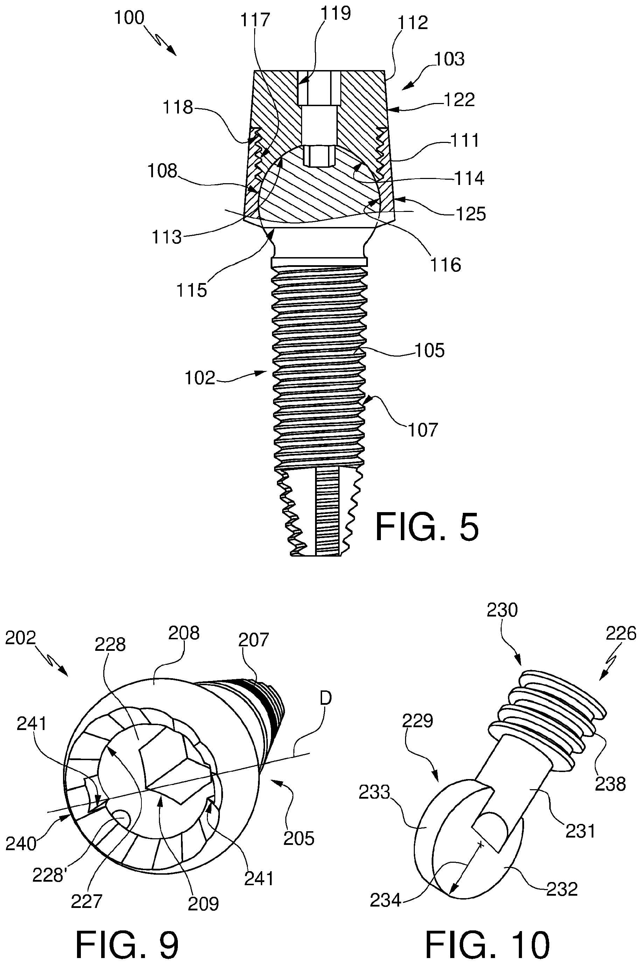

A further version of the dental implant according to an embodiment not belonging to the present invention is illustrated in figure 5 and indicated with number 100. The components described in relation to the preceding embodiment will be indicated with the same reference numbers increased by 100.

The dental implant 100 differs due to the configuration of the abutment 103, adapted to allow the conical connection with a respective dental crown, not illustrated in the enclosed figures.

The abutment 103 is associable, by means of a sphere connection, with at least one part of the head portion 108 of an anchorage body 102.

The anchorage body 102 actually corresponds to the previously-described anchorage body 2 and comprises a stem 105 bearing a thread 107 engageable in a mandibular or maxillary site.

The abutment 103 is configured for allowing a connection of conometric type with a respective dental crown or artificial tooth not illustrated in the enclosed figures.

More in detail, the abutment 103 comprises an annular element 111 and a support element 112 mutually connectable, by means of a threaded connection, in order to delimit a site 113 configured as a part of a sphere adapted to house at least one part of the head portion 108.

The support element 112 is configured frustoconical or substantially frustoconical, and on the lower part of which a portion is extended bearing an external thread 118.

The support element 112 has an internal cavity 114 shaped as a sphere part with a diameter equal or substantially equal to that of the head portion 108 of the anchorage body 102.

Analogously, the annular element 111 delimits a central opening 115 which defines a shaped site 116 corresponding to a part of a sphere with the same diameter or substantially with the same diameter as that of the head portion 108 of the anchorage body 102.

The annular element 111 has a portion bearing an internal thread 117, engageable by the corresponding external thread 118 made along a portion of the support element 112.

It is observed that, analogous to the preceding embodiment, the internal thread 117 is extended above the shaped site 116.

The support element 112 has a tilted lateral surface 122.

Analogously, the annular element 111 has a tilted lateral surface 125.

In fact, by mutually connecting the annular element 111 and the support element 112, the tilted lateral surface 125 and the lateral surface 122 are flush with each other, in a manner so as to define a continuous surface or substantially continuous surface along which a connection of conometric type is made.

The support element 112 can have a central opening 119 which is centrally extended through the support element 112 itself.

The central opening 119 can be suitably shaped in order to be engageable by a tool and thus allow the tightening of the support element 112 relative to the annular element 111. By way of a non-limiting example, the opening 119 can have hexagonal shape.

The operation of the dental implant 100 is the same as that described in relation to the preceding embodiment.

The dental implant 100 is then capable of attaining the same objects as the preceding embodiment, in the scope of a solution comprising a limited number of components, and with extremely flexible use.

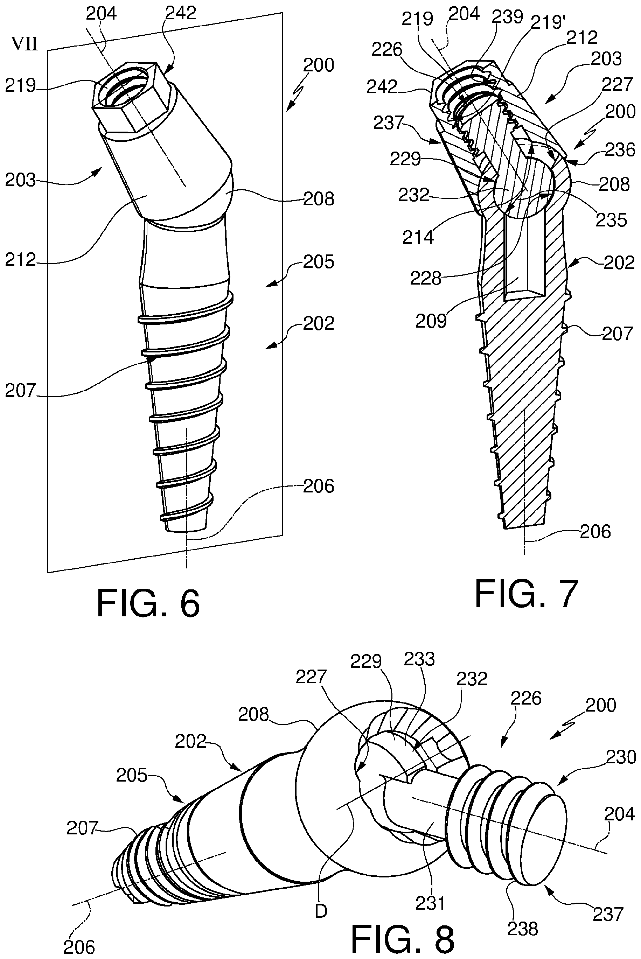

A version of the dental implant according to the present invention is illustrated in figures 6 to 10, and is indicated with the number 200.

The components described in relation to the preceding embodiments will be indicated with the same reference numbers increased by 100 (second embodiment, dental implant 100) or 200 (first embodiment, dental implant 1).

The implant 200 differs from the preceding embodiments with reference to the shape of the abutment 203 and to its modes of connection to the anchorage body 202.

The implant 200, however, maintains unchanged the possibility of varying the position of the abutment 203 relative to the anchorage body 202 by means of the presence of a spherical coupling between such components.

While in implants 1 and 100 such spherical connection is attained by means of the use of an annular element 11 and 111 which is provided outside the head portion 8 and 108, in order to retain it within a shaped site 16 and 116, in the implant 200 the use of a connection element 226 is provided, operatively associated in a site made in the head portion 208, according to modes which will be described hereinbelow.

The implant 200 comprises an anchorage body 202 that has the same characteristics described in relation to the preceding embodiments, to which reference is made.

It is merely observed herein that the anchorage body 202 comprises a stem 205, threaded (thread 207), which is extended along the longitudinal axis 206 and a head portion 208 with which abutment 203 is associable.

The head portion 208 is spherically configured or it has a sphere portion or a substantially spherical portion.

The head portion 208 can be made integrally with the stem 205 or, possibly, removable from the latter according to a solution capable of preventing the presence of junctions at the connection between the stem 205 and the head portion 208.

The head portion 208 delimits a spherical internal site 228 or a sphere portion or substantially spherical portion and on the upper part it has a central through opening 227 that is circular or substantially circular which allows the access to the internal site 228.

The internal site 228 is adapted to at least partially house a portion of the connection element 226.

The anchorage body 202 comprises a shaped slot 209, which is extended at least partially along the stem 205 and is accessible from outside the anchorage body 202 through the central through opening 227 and the internal site 228 (see figure 7 and 9).

The shaped slot 209, like that described in relation to the preceding embodiments, acts as site engageable by a tool usable for screwing the anchorage body 202 in the bone site. Such shaped slot 209 can have a planar extension that is hexagonally-shaped, square-shaped or has further shapes adapted to accomplish the same above-described technical function.

With reference to that illustrated in the enclosed figures 7 and 10, the connection element 226 has a first coupling portion 229 and a second coupling portion 230 mutually connected by means of a central portion 231.

With reference to that illustrated in the enclosed figures 7 and 10, the first coupling portion 229 can be configured as a spherical segment 232 adapted to engage the internal site 228 made in the head portion 208, defining a spherical coupling, while the second coupling portion 230 is configured for engaging a respective portion of the abutment 203.

With the term "spherical segment" it is intended to indicate at least one portion of a spherical body comprised between two surfaces that are parallel to each other (such as a discoid element) or a portion of a sphere such as a spherical cap.

With reference to the version illustrated in the enclosed figures 7 and 10, the spherical segment 232 is configured as a discoid element, even if it is intended that further versions are possible which are capable of ensuring a coupling of spherical type between the coupling element 229 and the internal site 228 made in the head portion 208.

According to such version, the central portion 231 starts from a lateral surface 233 comprised between the two parallel surfaces which delimit the discoid element. In fact, the width of the lateral surface 233 corresponds to the thickness of the discoid element.

As stated above, the spherical segment 232 could be made in a different manner. By way of example, the spherical segment 232 could be shaped as the discoid element illustrated in the enclosed figures, lacking a portion diametrically opposite that from which the central portion 231 departs.

According to a further version of the present invention, not illustrated in the enclosed figures, the first coupling portion 229 can be configured for example as a "T", which allows attaining the same technical effects attained by the spherical segment 232. According to such version, the central portion 231 can start from the central branch of the T-shaped element, while the two opposite horizontal arms, of the latter, once inserted within the internal site 228 according to the modes described above, allow stably maintaining the connection element 226 within the site 228. It is intended that according to such version, the opposite ends of the horizontal arms of the T-shaped element can be rounded in order to prevent internally damaging the internal site 228.

It is intended that further versions of the connection element 226 are possible, comprising a first coupling portion 229 shaped differently with respect to that described above, while falling within the same inventive concept of the present invention.

With reference to a connection element 226 comprising a spherical segment 232, it is observed that the latter has a radius 234 smaller than the internal radius 235 of the internal site 228 of the head portion 208 (see figures 7 and 10).

In such a manner, the mobility between the first coupling portion 229 and the internal site 228 is allowed, when the first is housed within the second.

As stated above, the connection element 226 comprises a second coupling portion 230 and a central portion 231. The second coupling portion 230 and at least part of the central portion 231 exit outward from the internal site 228 of the head portion 208 in order to allow the connection between the connection element 226 and the abutment 203.

The second coupling portion 230 and the central portion 231 can have a cylindrical shape or substantially cylindrical shape for the aims described hereinbelow.

In the cases where it is necessary to reach high tilts between the axis 204 of the abutment 203 and the longitudinal axis 206 of the anchorage body 202, the central portion 231 can abut against the edge of the central through opening 227.

The presence of a rounded surface in abutment against such edge in fact prevents jamming from occurring between the central portion 231 and the edge of the central through opening 227, facilitating the relative mobility between the connection element 226 and the internal site 228 of the head portion 208.

It is intended that further versions of the present invention are possible, in which the central portion 231 can have a hexagonal or elliptical cross section, or cross section with further geometric forms, without any limitation.

The abutment 203, analogous to the preceding embodiments, has an axis 204, whose orientation can be varied relative to the longitudinal axis 206 of the anchorage body 202 due to the spherical coupling between the abutment 203 and the head portion 208 of the anchorage body 202.

With respect to that described in relation to the preceding embodiments, the abutment 203 comprises only the abutment element 212.

The abutment element 212 has a frustoconical or substantially frustoconical progression.

In addition, the support element 212 has, at one end, an internal cavity 214 shaped as a sphere part with a radius equal to or substantially equal to that of the head portion 208 of the anchorage body 202 (see figure 7).

The internal cavity 214 is accessible from the outside through a circular lower opening 236.

According to one version of the dental implant 200, the abutment 203 could have a central through opening 219 which is extended through the entire support element 212 itself, leading into the internal cavity 214.

The through opening 219 is made centrally with respect to the support element 212 and is extended along the axis 204.

The through opening 219 can have at least one threaded internal section 219' which is extended at least through a portion of the through opening 219 starting from the top (top during use) of the abutment 203.

Such at least one threaded internal section 219' allows the connection and the subsequent blocking in position of a crown, not illustrated in the enclosed figures, on the abutment 203.

According to a further version of the present invention, the blocking in position between the crown and the abutment 203 could occur by means of a coupling of conometric type, according to modes known in the field.

The implant 200 comprises coupling means 237 for the coupling between the connection element 226 and the abutment 203.

More in detail, the coupling means 237 allow the connection between the second coupling portion 230 of the connection element 226 and the abutment 203.

Preferably, the coupling means 237 are configured for making a connection of removable type. By way of example, the coupling means 237 can comprise an external threaded portion 238, which is extended along the second coupling portion 230 of the connection element 226, and a corresponding internal threaded portion 239, which is extended inside the abutment 203.

More precisely, the internal threaded portion 239 is made along at least one section of the abutment 203 affected by the central through opening 219.

The coupling means 237 allow the connection between the abutment 203 and the second coupling portion 230, in a manner such that the central portion 231 of the connection element 226 is aligned along the axis 204 of the abutment 203 itself. Following the screwing of the abutment 203 along the second coupling portion 230, the internal cavity 214 is placed in abutment against at least one part of the head portion 208, thus determining an abutment and the subsequent blocking in position between the abutment 203 and the anchorage body 202.

According to a further version of the present invention, not illustrated in the enclosed figures, the coupling means 237 can be of magnetic type in order to allow a connection of removable type between the connection element 226 and the abutment 203. According to such version, at least one between the second coupling portion 230 and the central opening 219 can be magnetized and at least one portion of the other between the central opening 219 and the second coupling portion 230 can be made of ferritic material. Hence, in order to obtain the magnetic connection, it is sufficient to position the second coupling portion 230 within the central opening 219 made in the abutment 203.

With regard instead to the mutual connection between the connection element 226 and the internal site 228 of the head portion 208, it is necessary to position the first coupling portion 229 with a pre-established alignment with respect to the central through opening 227 made in the top of the head portion 208, as better described hereinbelow.

With reference to the embodiment illustrated by way of example in the enclosed figures 8 and 9, the central through opening 227 has a widening 240 at a diameter D of the central through opening 227 itself.

The widening 240 determines further sites 241 which intercept the central through opening 227 and are extended within the internal site 228.

In fact, the widening 240 defines the position with respect to which it is necessary to align the first coupling portion 229 of the connection element 226 in order to be able to insert the latter within the internal site 228.

Indeed it is observed that the spherical segment 232 of the first coupling portion 229 has a radius 234 greater than that of the central through opening 227.

The widening 240 of the central through opening 227 has an extension at least equal to the diameter of the spherical segment 232 or greater than this, in order to allow the insertion of the latter in the internal site 228.

Hereinbelow, a description of the operation of the dental implant 200 according to the present invention is reported.

A dental implant 200 comprising an anchorage body 202 is provided.

Then, after having identified and prepared the mandibular or maxillary bone site to which the dental implant 200 is to be constrained, the surgeon proceeds by introducing the free end of the anchorage body 202 in such site.

Subsequently, the surgeon screws the anchorage body 202 in the bone site, driving it in rotation around the longitudinal axis 206. For such purpose, it is possible to use a suitable tool engaged in the shaped slot 209 accessible through the top of the head portion 208.

Such shaped slot 209 is in fact accessible through the central through opening 227 made in the top of the head portion 208.

Once the step of insertion of the anchorage body 202 has terminated, a connection element 226 is provided in proximity to the central through opening 227.

For such purpose, it is necessary to align the first coupling portion 229 with the widening 240, and then introduce the first coupling portion 229 within the internal site 228.

With the first coupling portion 229 engaged within the internal site 228, the connection element 226 is rotated, so as to misalign the spherical segment 232 from the widening 240. In such a manner, the first coupling portion 229 is constrained in the internal site 228, preventing the exit thereof through the central through opening 227.

It is observed that the internal site 228 can have at least one protuberance 228' which is extended at its interior, adapted to selectively block the rotation of the first coupling portion 229 housed in the internal site 228 itself.

With reference to that illustrated in the enclosed figure 9, the at least one protuberance 228' is depicted as a sphere portion, even if it is intended that further shapes are possible which are adapted to complete the same technical task.

Then, an abutment 203 is provided and the same is connected to the second coupling portion 230 of the connection element 226, which is extended outside the head portion 228, by means of the coupling means 237. If the coupling means 237 comprise threaded portions 238, 239, one continues with the screwing of the abutment 203 along the second coupling portion 230 up to determining a first match between the internal cavity 214 of the abutment 203 against the head portion 208.

The screwing of the abutment 203 on the second coupling portion 230 is facilitated by the presence of the at least one protuberance 228'. The latter, in fact, by blocking the rotation of the first coupling portion 229 around an axis which is substantially aligned with the longitudinal axis 206, prevents the rotation of the connection element 226 in the internal site 228 during the screwing between the abutment 203 and the second coupling portion 230 of the connection element 226. Then, the abutment 203 is positioned in the pre-established implant position, by mutually sliding the internal cavity 214 on the spherical or substantially spherical surface of the head portion 208, and then the same is further tightened against the head portion 208, firmly constraining the components together.

With reference to that set forth above in relation to the presence of the possible protuberance 228', it is observed that it is necessary to act only on the abutment 203 in order to determine the correct tightening of the latter with the connection element 226, preventing the use of further instruments for maintaining the connection element 226 itself blocked.

The abutment 203 can have a shaped upper portion 242 engageable by tightening means not illustrated in the enclosed figures, in order to allow the screwing of the abutment 203 along the second coupling portion 230 (see figures 6 and 7).

By bringing the internal cavity 214 of the abutment 203 against the head portion 208 and exerting a further tightening action, one determines a stable and secure abutment between such components, actually blocking the abutment 203 in position with respect to the anchorage body 202.

With respect to the preceding embodiments, the dental implant 200 has a configuration that is even simpler to install, since it is possible to easily connect the abutment 203 on the upper part of the anchorage body 202 after the latter has been screwed in the implant bone site.

The connection between the abutment 203 and the anchorage body 202 is in fact obtained through the connection element 226, which is engageable in the spherical portion 208 of the anchorage body 202 by means of an access from above.

The dental implant 200 allows attaining the same advantages described in relation to the preceding embodiments with reference in particular to the possibility of being able to adjust, in a practical, quick and precise manner, the tilt of the abutment 203 relative to the longitudinal axis 206 of the anchorage body 202.

In addition, it is observed that in order to execute the assembly of the implant 200, the connection element 226, and hence the abutment 203, are operatively connectable to the anchorage body 202 from above. Therefore, it is possible to install the anchorage body 202 within the implant bone site and submerge it with the mucous membranes sutured, facilitating the osseointegration between the same without masticator loads. Subsequently, it is possible to operatively connect the connection element 226 and the abutment 203 to the anchorage body 202 according to the above-described modes.

According to a further aspect, the connection element 226 and the abutment 203 can be mutually connected and then connected to the head portion 208 of the anchorage body 202. Proceeding in such a manner, it is possible to execute the necessary maneuvers for the assembly of the dental implant 200 and for the correct positioning of the abutment 203 without risking the loss of the connection element 226 or the abutment 203 itself in the mouth of the patient during the implant step.

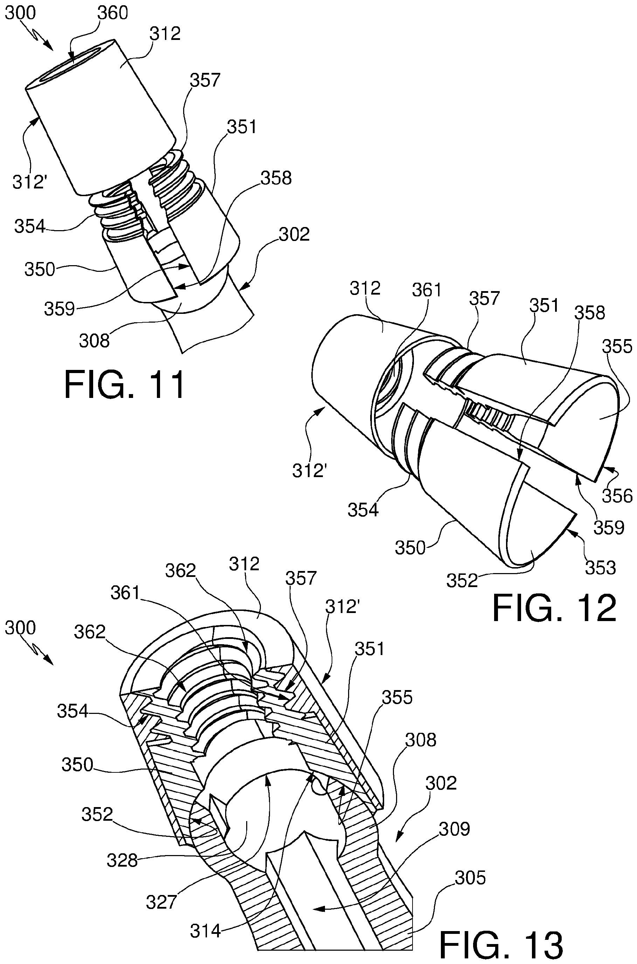

A further embodiment of the dental implant according to an embodiment not belonging to the present invention is illustrated in the enclosed figures 11 to 13 and is indicated overall with the reference number 300.

In the following description, the components of the dental implant 300 corresponding to those described above for the second embodiment, dental implant 100, will be indicated with the same reference numbers increased by 200. The dental implant 300 differs from the dental implant 100 in relation to the shape of the abutment 303 and of its modes of connection to the head portion 308 made at the top (top during use) of the anchorage body 302.

It is observed that the anchorage body 302 can be configured substantially similar to the anchorage body 202 and hence comprise the head portion 308.

The latter delimits a spherical internal site 328 or a site with sphere portion or substantially spherical portion and on the top it has a central through opening 327 that is circular or substantially circular which allows the access to the internal site 328.

The anchorage body 302 comprises a shaped slot 309, which is at least partially extended along the stem 305 of the anchorage body 302 and accomplishes the same aims described in relation to the preceding embodiments.

The dental implant 300, in place of the annular element 111, has a first shell component 350 and a second shell component 351, mirroring each other and operatively and mutually connectable in order to act as a support, to which the support element 312 can be connected, so as to provide a spherical connection between the support element 312 and the head portion 308 of the anchorage body 302.

More in detail, the first shell component 350 has a shaped internal site 52, adapted to abut against the head portion 308 with the first shell component 350 connected to the head portion 308 itself.

The shaped internal site 352 leads outside the first shell component 350 from a lower opening 353, lower during use.

It is then observed that the first shell component 350 has a threaded external portion 354 which is extended for at least one section of the end of the first shell component 350 opposite that where the shaped internal site 352 (see figures 12 and 13) is made.

The second shell component 351 has the same shape as the first shell element 350. The second shell component 351 then has a respective shaped internal site 355 which can be reached on the lower part through a respective lower opening 356. The second component 351 also has a respective threaded external portion 357 which is extended at least for a section along the second shell component 351 opposite that where the respective internal site 355 is made.

The first shell component 350 and the second shell component 351 are made mirrored to each other.

The first shell component 350 has a coupling surface 358 that can be fit close, during use, to a respective coupling surface 359 made in the second shell component 351.

Preferably, the coupling surface 358 and the respective coupling surface 359 are flat.

By bringing the coupling surface 358 of the first shell component 350 in abutment with the respective coupling surface 359 of the second shell component 351, one obtains an internal cavity 314, configured as a sphere portion, similar to that described in relation to the preceding embodiments, within which the head portion 308 of the anchorage body 302 is to be housed.

It is observed that the threaded external portion 354 of the first shell component 350 and the respective threaded external portion 357 of the second shell component 351 can be coupled together according to a solution capable of defining a continuous thread on which the support element 312 is to be screwed. The support element 312 differs from the version described in relation to the dental implant 100 with reference to the presence of an internal threaded portion adapted to be coupled with the threaded portions present respectively along the first shell component 350 and the second shell component 351.

More in detail it is observed that the support element 312 can be configured frustoconical or substantially frustoconical and have a tilted lateral surface 312'. The support element 312 has an internal through cavity 360.

Along at least one section of the internal through cavity 360, the support element 312 has an internal thread 361 complementary to the threaded external portion 354 of the first shell component 350 and to the respective threaded external portion 357 of the second shell component 351.

The remaining portion of the through cavity 360 is adapted to slide and be coupled, by means of shape coupling, relative to the external portion of the first shell component 350 and to that of the second shell component 351 which are not affected by the threaded external portion 354 and by the respective threaded external portion 357.

In fact, the support element 312 acts as connection element adapted to adjust the tightening of the first shell component 350 and of the second shell component 351 against the head portion 308 of the anchorage body 302, as better described hereinbelow.

It is observed that the first shell component 350 and the second shell component 351 can each have a threaded internal section 362 (see figure 13).

Such threaded internal section 362, when said first shell component 350 and said second shell component 351 are mutually connected, defines a threaded site for the connection of a crown, not illustrated in the enclosed figures, to the dental implant 300.

A summary description is reported below of the operation of the dental implant 300 according to an embodiment not belonging to the present invention.

A dental implant 300 comprising an anchorage body 302 is provided.

Then, after having identified and prepared the mandibular or maxillary bone site to which the dental implant 300 is to be constrained, the surgeon proceeds by introducing the free end of the anchorage body 302 in such site.

Subsequently, the surgeon screws the anchorage body 302 in the bone site, using a suitable tool engaged in the shaped slot 309, accessible through the top of the head portion 308.

Once the step of insertion of the anchorage body 302 has terminated, one provides a first shell component 350 and a second shell component 351, bringing them both with the respective internal shaped sites 352 and 355 in abutment against the head portion 308. Then, after having aligned the first shell component 350 and the second shell component 351 with each other, the support element 312 is screwed on the threaded external portion 354 and on the respective threaded external portion 357.

As a function of how much the support element 312 is screwed on the first shell component 350 and on the second shell component 351, the action of tightening the same on the head portion 308 is adjusted, allowing or blocking the relative movement of the abutment 305 with respect to the anchorage body 302.

Actually, the first shell component 350 and the second shell component 351 act as jaw elements relative to the head portion 308, retaining it at their interior and defining a joint of spherical type with the same, whose degree of mobility/blocking can be selectively adjusted.

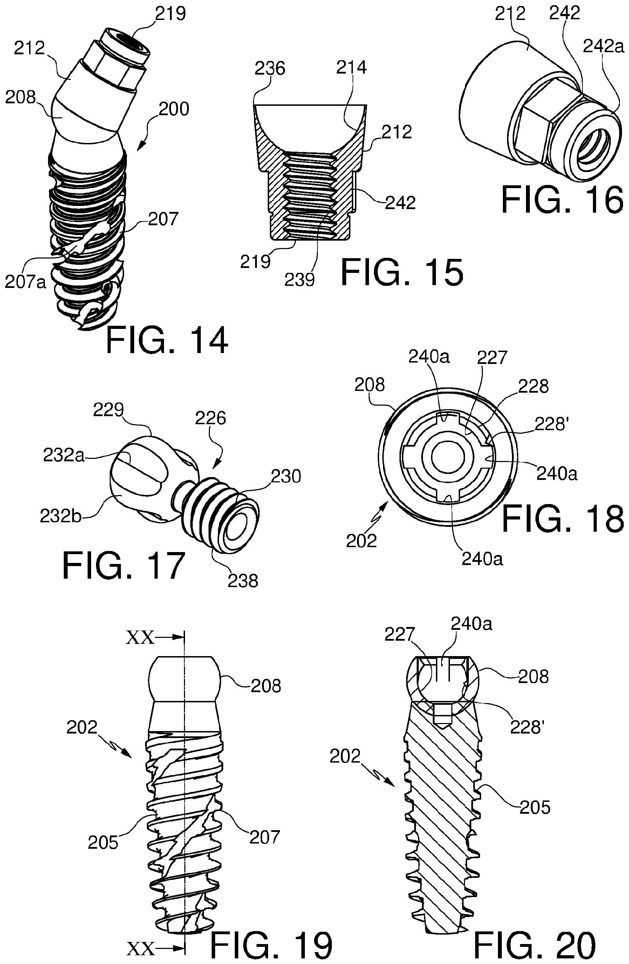

Another embodiment of the dental implant according to the present invention is illustrated in the enclosed figures 14 to 20, which corresponds in fact with the implant 200 of figures 6 to 10, but with a connection element 226 and corresponding site 228 in the head portion with slightly different configuration. On such matter, the connection element 226 has a first coupling portion 229 which is not configured with spherical segment, but rather with a central section 232a with two, three, four or more projecting sections or petals 232b protruding from the latter, for example angularly offset from each other, if desired four petals at 90° from each other and radial. The projecting sections or petals 232b could have curved configuration, i.e. a semi-spherical segment.

The internal site 228 instead has a central through opening 227 and slots 240a, in particular two, three, four or more slots 240a that are recessed with respect to the central through opening 227 and angularly spaced by the same angle or distance as the projecting sections or petals 232b, such that it is possible to insert the latter in the slots 240a.

The four slots 240a then determine further sites which intercept the central through opening 227 and are extended within the internal site 228.

Indeed, the slots 240a define the position with respect to which it is necessary to align the first coupling portion 229 of the connection element 226 in order to be able to insert the latter within the internal site 228.

It is in fact observed that the four slots 240a of the first coupling portion 229 have a radius or distance from the respective center or central axis from the central section 232a greater than that of the central through opening 227.

The slots 240a of the central through opening 227 have an extension at least equal to the diameter or distance of the projecting sections 232b from the center or central axis from the central section 232a or greater with respect thereto in order to allow the insertion of the latter in the internal site 228.

The other components of the dental implant illustrated in figures 14 to 20 substantially correspond, if desired with slight differences, to those of the implant of figures 6 to 10, so that it is not deemed useful to repeat the description of the same.

With regard thereto, the stem 205 can have grooves 207a for interrupting the thread 207. These grooves 207, which clearly can also have different shape, serve to create a cutting edge on the turns of the thread of the implant, so as to render the latter self-threading.

The abutment 203 can instead have a terminal cylindrical or annular section 242a after or more external with respect to the shaped upper portion 242.

The same discussion holds true with reference to the operation of such dental implant.

In any case, as indicated above, the form of the connection element 226 could also be different, e.g. also with 1, 2 or 3 slots.

In addition, it is understood that according to the present invention, in place of a spherical connection, it is also possible to have a connection of different type, even cubic or triangular. In substance, the present invention is based on a system of coupling and fixing the abutment by means of insertion.

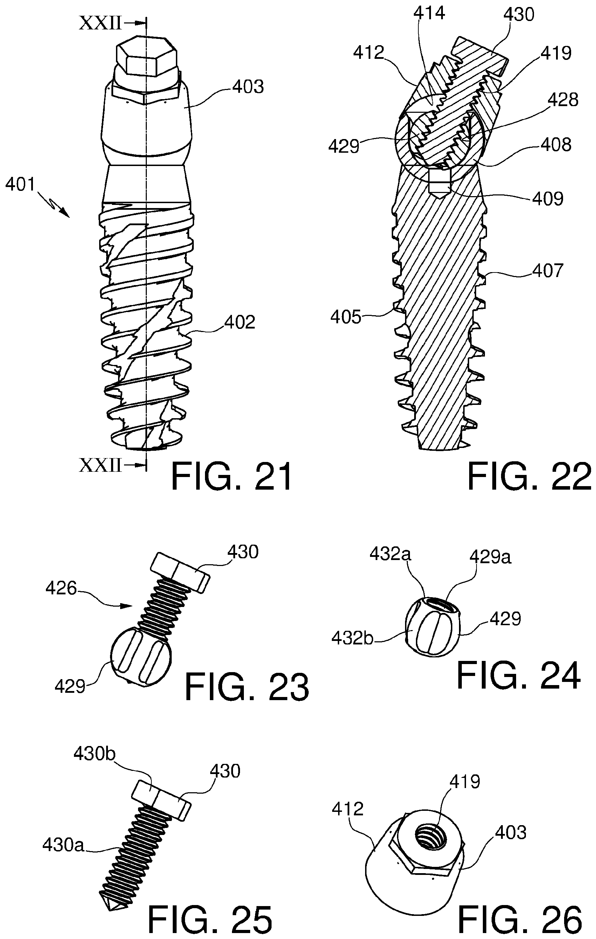

A further version of the dental implant according to the present invention is illustrated in figures 21 to 26, and is indicated with number 400.

The components described in relation to the preceding embodiments will be indicated with the same reference numbers, respectively reduced by 100 (third embodiment, dental implant 200) or 200 (second embodiment, dental implant 100).

The implant 400 differs from the preceding embodiments with reference to the shape of the abutment 403 and to its modes of connection to the anchorage body 402.

The implant 400, however, maintains unchanged the possibility of varying the position of the abutment 403 relative to the anchorage body 402 by means of the presence of a spherical coupling between such components.

While in the implants 1 or 100 such spherical or non-spherical connection is attained by means of the use of an annular element 11 and 111 which is provided outside the head portion 8 and 108, in order to retain it within a shaped site 16 and 116, in a manner similar to what occurs in the implant 300, in the implant 400 it is provided to use a connection element 426 operatively associated in a site made in the head portion 408, according to modes that will be described hereinbelow. The implant 400 comprises an anchorage body 402 which has the same characteristics described in relation to the preceding embodiments, to which reference is made.

It is only observed that the anchorage body 402 comprises a stem 405, if desired threaded (thread 307) which is extended along the longitudinal axis and a head portion 408 with which the abutment or abutment 403 can be associated.

The head portion 408 can be configured spherical or with sphere portion or substantially spherical portion.

The head portion 408 can be made integral with the stem 405 or, possibly, removable from the latter according to a solution capable of preventing the presence of junctions at the connection between the stem 405 and the head portion 408.

The head portion 408 delimits an internal site 428, for example spherical or with sphere portion or substantially spherical portion and on the upper part it has a central through opening that is circular or substantially circular which allows the access to the internal site 428.

The internal site 428 is adapted to at least partially house a portion 429 of the connection element 426.

The anchorage body 402 comprises a shaped slot 409, which is extended at least partially along the stem 405 and is accessible from outside the anchorage body 402 through the central through opening and the internal site 428.

The shaped slot 409, like that described in relation to the preceding embodiments, acts as a site engageable by a tool useable for screwing the anchorage body 402 in the bone site. Such shaped slot 409 can have a planar extension with hexagonal or square shape or with further shapes adapted to accomplish the same abovementioned technical function.

The connection element 426 has a first coupling component 429 and a second coupling component 430 mutually connected for example via screwing, preferably, during use, with interposition of the abutment 403. In substance, the abutment 403 is, during use, tightened between second coupling component 430 and head 408.

The first coupling component 429 can be configured as a spherical segment adapted to engage the internal site 428 made in the head portion 408, defining a spherical coupling, while the second coupling component 430 is configured for engaging a respective portion of the abutment 403.

With the term "spherical segment" it is intended to indicate at least one portion of a spherical body comprised between two surfaces parallel to each other (such as a discoid element) or a portion of a sphere such as a spherical cap.

Such spherical segment can be configured as a discoid element, even if it is intended that further versions are possible which are able to ensure a coupling of spherical type between the coupling element 429 and the internal site 428 made in the head portion 408.

With regard thereto, reference is made to the description of the spherical segment and respective engagement site with reference to the embodiment of figures 6 to 10.

Alternatively, the connection element 426 has a first coupling component 429 which is not configured with spherical segment, but rather with a central section 432a with two, three, four or more projecting sections or petals 432b protruding from the latter, for example angularly offset from each other, if desired four petals at 90° from each other or radial. The projecting sections or petals 432b could have curved configuration, i.e. with semi-spherical segment.

The internal site 428 has in such case a central through opening and slots, in particular two, three, four or more slots that are recessed with respect to the central through opening and angularly spaced by the same angle and distance as the projecting sections or petals 432b, such that it is possible to insert the latter in the slots.

The four slots then determine further sites which intercept the central through opening and are extended within the internal site 428.

Indeed, the slots define the position with respect to which it is necessary to align the first coupling component 429 of the connection element 426 so to be able to insert the latter within the internal site 428.

With regard to this, reference is made to the description of the embodiment of figures 14 to 18.

In addition, the first coupling component 429 can have a central through opening or hole 429a, if desired internally threaded, in which the second coupling component 430 can be inserted, e.g. configured as a bolt or screw.

In such case, the second coupling component 430 can have a stem 430a and a head 430b.

It is intended that there are possible further versions of the connection element 426 comprising a first coupling portion 429 shaped differently from that described above, even if falling within the same inventive concept of the present invention. The abutment 403, analogous to the preceding embodiments, has an axis whose orientation can be varied relative to the longitudinal axis of the anchorage body 402 due to the spherical coupling between the abutment 403 and the head portion 408 of the anchorage body 402.

With respect to that described in relation to the preceding embodiments, the abutment 403 comprises only the abutment element 412.

The abutment element 412 has a frustoconical or substantially frustoconical progression.

In addition, the support element 412 has, at one end, an internal cavity 414 shaped as a sphere part with a radius equal or substantially equal to that of the head portion 408 of the anchorage body 402.

The internal cavity 414 is accessible from outside through a circular lower opening.

According to one version of the dental implant 400, the abutment 403 could have a central through opening 419 which is extended through the entire support element 412 itself, leading into the internal cavity 414.

The through opening 419 can have at least one threaded internal section which is extended for a portion or better yet for the entire through opening 419 starting from the top, top during use, of the abutment 403.

Such at least one threaded internal section allows the passage of the second coupling component 430 or better yet of the respective stem 430a for the engagement with first coupling component 429.

In such case, the stem 430a is inserted within the through opening 419 of the abutment 403 and within the central through opening 429a, while the head 430b has width or size greater than the through opening 419 defined by the abutment 403 and is set to be abutted from outside against the latter so as to tighten it, when the stem 430a is screwed or connected in the central through opening 429a, towards and around the head 408.

In substance, the stem 430a or the threaded section thereof acts as coupling means for the coupling between the connection element 426 and the abutment 403. More in detail, such coupling means allow the connection between the second coupling portion 430 of the connection element 426 and the abutment 403. Preferably, these coupling means are configured for making a connection of removable type.

Following the screwing of the second coupling component 330 in the opening 419 of the abutment 403 and with the first coupling component 429, the internal cavity 414 is then placed in abutment against at least one part of the head portion 408, thus determining an abutment and the subsequent blocking in position between the abutment 403 and the anchorage body 402.

According to a further version of the present invention, not illustrated in the enclosed figures, the coupling means can be of magnetic type in order to allow a connection of removable type between the connection element 426 and the abutment 403.

Hereinbelow, a description is reported of the operation of the dental implant 400 according to the present invention.

A dental implant 400 comprising an anchorage body 402 is provided.

Then, after having identified and prepared the mandibular or maxillary bone site to which the dental implant 400 is to be constrained, the surgeon proceeds by introducing the free end of the anchorage body 402 in such site.

Subsequently, the surgeon screws the anchorage body 402 in the bone site, driving it in rotation around the respective longitudinal axis. For such purpose it is possible to use a suitable tool engaged in the shaped slot 409 accessible through the top of the head portion 408.

Such shaped slot 409 is in fact accessible through the central through opening made in the top of the head portion 408.

Once the step of insertion of the anchorage body 402 has terminated, a connection element 426 is provided in proximity to the central through opening.

For the mounting of the first coupling component 429 in the internal site 428, one proceeds as described above with reference to the embodiment of figures 6 to 10. Then, an abutment 403 is provided and this is placed at the head portion 428 in order to then insert the second coupling component 430 in the abutment 403 and engage, e.g. via screwing engagement, the first coupling component 429.

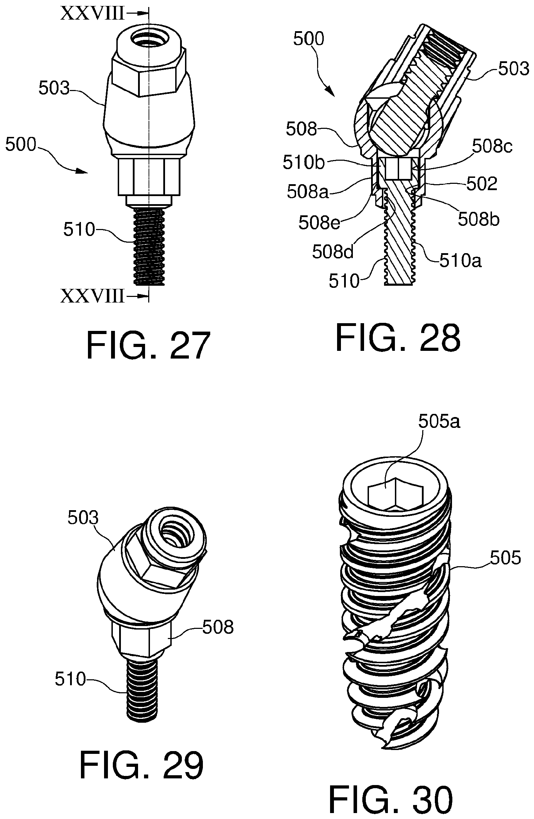

A further version of the dental implant 500 according to the present invention is illustrated in figures 27 to 30, which actually corresponds with the implant 200 of figures 6 to 10, even if unlike the latter it has an anchorage body 502 which has a head portion 508 not integral with the stem 505, but removable from the latter. More particularly, a connector element 510 is provided for connecting between the head 508 and the stem 505.

On such matter, the head portion 508 of the embodiment of figures 27 to 30 has a section 508a that during use is lower or in any case proximal to the tip or end of insertion of the stem 505, which delimits an insertion and constraint through site 508b having a first section 508c, proximal to the abutment 503, with greater section and a second section 508d, distal from the abutment 503, with smaller section so as to define an internal shoulder between them 508e, if desired annular abutment shoulder.

The connector element 510 instead has a stem 510a, if desired externally threaded and with width or cross section smaller than the first 508c and second 508d of the insertion site 508b, as well as an enlarged end 510b with width or cross section smaller than the first section 508c of the insertion site 508b, but greater than the second section 508d, such that during use the stem 510a is extended, during use starting from the insertion and constraint site 508b, away from the head 508, while the enlarged end 510b is in abutment against the internal shoulder 508e. The stem 510a is then insertable and fixable, e.g. via screwing in a stem 505, or better yet in a main internally threaded site 505a delimited by the stem 505.

As can be inferred, an implant 500 as now described, due to the presence of the connector element 510, is fixable, e.g. actually screwable in all the stems proposed up to now, while the above-described fixing part of the abutment - to which the tooth can be fixed in any angle - remains unchanged.

Clearly, it is possible to provide for a constraint between any one stem and the head 508 different from that described above, also lacking connector element 510 or with different connector element, if desired even with connector element 510 integral with the head 508.

A dental implant 200, 400, 500 according to the present invention, allows reducing the invasiveness and the duration of a surgical intervention necessary for its installation, thus reducing the discomfort of the patient.

The invention is defined in the claims.

## Claims

1. Dental implant (200, 400, 500) comprising an anchorage body (202), comprising a stem (205, 405, 505) bearing a thread (207, 407) engageable in a mandibular or maxillary site, an abutment (203, 403, 503) to which a dental crown is connectable, wherein said anchorage body (202, 402, 502) and said abutment (203, 403) are operatively connected to each other by means of a spherical connection, **characterized in that** said anchorage body (202, 402, 502) comprises a head portion (208, 408, 508) bearing on its top an internal site (228, 428) accessible through a central through opening (227) for housing in said internal site (228, 428) a connection element (226, 426) of the implant (200, 400, 500) able to connect said abutment (203, 403, 503) to said anchorage body (202, 402, 502).

2. Dental implant according to claim 1, wherein said head portion (208, 408) is integrally made with said stem (205, 405).

3. Dental implant according to claim 1 or 2, wherein said anchorage body (202, 402) has a connection portion between said head portion (208, 408) and said stem (205, 405), configured as a continuous surface, lacking edges.

4. Dental implant according to claim 1, 2 or 3, wherein said abutment (203, 403) comprises a support element (212, 412) which has, at one end, an internal cavity (214, 414) shaped as a part of sphere with a radius equal to or substantially equal to that of said head portion (208, 408) accessible from the outside through a lower circular opening (236).

5. Dental implant according to the previous claim, wherein said support element (212, 412) has a central opening (219) which extends through said support element (212, 412) grasping in said internal cavity (214, 414).

6. Dental implant according to any one of the preceding claims, in which the said central through opening (227) is circular or substantially circular and engages in the said internal site (228).

7. Dental implant according to any one of the preceding claims, in which said internal site (228) has at least one protuberance (228') which protrudes inside it, able to detect against a first coupling portion (229) of the said connecting element ( 226), to hinder the rotation of said first coupling portion (229) around said longitudinal axis (206).

8. Dental implant according to any one of the preceding claims, in which said anchorage body (202, 402) comprises a shaped slot (209, 409) which extends at least partially along said stem (205, 405) and is accessible from the outside of said anchorage body (202, 402) through said central opening (227) and said internal site (228, 428).

9. Dental implant according to any one of the preceding claims, in which said connecting element (226, 426) comprises a first portion or coupling component (229, 429), selectively engageable within said internal site (228, 428), a second portion or coupling component (230, 430) connectable to said abutment (203, 403) and by wanting a central portion (231) connecting between said first coupling portion (229) and said second coupling portion (230).

10. Dental implant according to the previous claim, wherein said first portion or coupling component (229, 429) is shaped as a spherical segment (232) adapted to engage a widening (240) made in said central opening (227), to access said internal site (228, 428).

11. Dental implant according to the previous claim, wherein said spherical segment (232) has a discoid or substantially discoidal shape and has a cross section complementary to said widening (240).

12. Dental implant according to claim 9, wherein said connection element (226, 426) has a first portion or coupling component (229, 429) with a central section (232a) with two, three, four or more projecting sections or petals (232b) protruding from the latter, while said internal site (228, 429) has instead a central through opening (227) and two, three, four or more slots (240a) in recess with respect to the central through opening (227) and angularly spaced from the same angle or distance of the projecting sections or petals (232b).

13. Dental implant according to any one of the preceding claims, comprising coupling means (237) between said second portion or coupling component (230) of said connection element (226, 426) and said abutment (203, 403).

14. Dental implant according to the previous claim, wherein said coupling means (237) comprises an external threaded portion (238) which extends along said second coupling portion (230, 430) of said connection element (226, 426) and a corresponding internal threaded portion (239) which extends inside said abutment (203, 403).

15. Dental implant according to any one of the preceding claims, wherein said support element (212) has a configuration with a truncated conical shape and has an internal cavity (214) shaped as a part of a sphere with a diameter equal to or substantially equal to that of said head portion (208).

## Patentansprüche

1. Zahnimplantat (200, 400, 500), umfassend einen Verankerungskörper (202), umfassend einen Schaft (205, 405, 505), der ein Gewinde (207, 407) trägt, das in eine Unterkiefer- oder Oberkieferstelle in Eingriff bringbar ist, ein Abutment (203, 403, 503), mit dem eine Zahnkrone verbindbar ist, worin der besagte Verankerungskörper (202, 402, 502) und das besagte Abutment (203, 403) mittels einer kugelförmigen Verbindung miteinander wirkverbunden sind, **dadurch gekennzeichnet, dass** der besagte Verankerungskörper (202, 402, 502) einen Kopfabschnitt (208, 408, 508) umfasst, der auf seiner Oberseite eine Innenstelle (228, 428) trägt, die durch eine zentrale Durchgangsöffnung (227) zugänglich ist, um in der besagten Innenstelle (228, 428) ein Verbindungselement (226, 426) des Implantats (200, 400, 500) aufzunehmen, das in der Lage ist, das besagte Abutment (203, 403, 503) mit dem besagten Verankerungskörper (202, 402, 502) zu verbinden.

2. Zahnimplantat nach Anspruch 1, worin der besagte Kopfabschnitt (208, 408) einstückig mit dem besagten Schaft (205, 405) hergestellt ist.

3. Zahnimplantat nach Anspruch 1 oder 2, worin der besagte Verankerungskörper (202, 402) einen Verbindungsabschnitt zwischen dem besagten Kopfabschnitt (208, 408) und dem besagten Schaft (205, 405) aufweist, der als durchgehende Oberfläche ohne Kanten ausgebildet ist.

4. Zahnimplantat nach Anspruch 1, 2 oder 3, worin das besagte Abutment (203, 403) ein Stützelement (212, 412) umfasst, dass an einem Ende einen inneren Hohlraum (214, 414) aufweist, der als ein Teil einer Kugel mit einem Radius gleich oder im Wesentlichen gleich dem des besagten Kopfabschnitts (208, 408) geformt ist, der von der Außenseite her durch eine untere kreisförmige Öffnung (236) zugänglich ist.

5. Zahnimplantat nach dem vorangehenden Anspruch, wobei das besagte Stützelement (212, 412) eine zentrale Öffnung (219) aufweist, die sich durch das besagte Stützelement (212, 412), das in den besagten inneren Hohlraum (214, 414) greift, erstreckt.

6. Zahnimplantat nach irgendeinem der vorangehenden Ansprüche, in dem die besagte zentrale Durchgangsöffnung (227) kreisförmig oder im Wesentlichen kreisförmig ist und in die besagte Innenstelle (228) eingreift.

7. Zahnimplantat nach irgendeinem der vorangehenden Ansprüche, in dem die besagte Innenstelle (228) mindestens einen in sie hineinragenden Vorsprung (228') aufweist, der in der Lage ist, gegen einen ersten Kopplungsabschnitt (229) des besagten Verbindungselements (226) zu drücken, um die Drehung des besagten ersten Kopplungsabschnitts (229) um die besagte Längsachse (206) zu verhindern.

8. Zahnimplantat nach irgendeinem der vorangehenden Ansprüche, in dem der besagte Verankerungskörper (202, 402) einen geformten Schlitz (209, 409) umfasst, der sich mindestens teilweise entlang des besagten Schaftes (205, 405) erstreckt und von der Außenseite des besagten Verankerungskörpers (202, 402) her durch die besagte zentrale Öffnung (227) und die besagte Innenstelle (228, 428) zugänglich ist.

9. Zahnimplantat nach irgendeinem der vorangehenden Ansprüche, in dem das besagte Verbindungselement (226, 426) einen ersten Abschnitt oder eine erste Kopplungskomponente (229, 429) umfasst, der/die selektiv in die besagte Innenstelle (228, 428) in Eingriff bringbar ist, und einen zweiten Abschnitt oder eine zweite Kopplungskomponente (230, 430), der/die mit dem besagten Abutment (203, 403) verbindbar ist und bei dem, wenn gewünscht, ein zentraler Abschnitt (231), zwischen dem besagten ersten Kopplungsabschnitt (229) und dem besagten zweiten Kopplungsabschnitt (230) verbunden ist.

10. Zahnimplantat nach dem vorangehenden Anspruch, worin der besagte erste Abschnitt oder die besagte Kopplungskomponente (229, 429) als ein kugelförmiges Segment (232) geformt ist, das geeignet ist, in eine Verbreiterung (240) einzugreifen, die in der besagten zentralen Öffnung (227) ausgebildet ist, um Zugang zu der besagten Innenstelle (228, 428) zu erhalten.

11. Zahnimplantat nach dem vorangehenden Anspruch, worin das besagte kugelförmige Segment (232) eine scheibenförmige oder im Wesentlichen scheibenförmige Form hat und einen Querschnitt aufweist, der komplementär zu der besagten Verbreiterung (240) ist.

12. Zahnimplantat nach Anspruch 9, worin das besagte Verbindungselement (226, 426) einen ersten Abschnitt oder eine erste Kopplungskomponente (229, 429) mit einem zentralen Abschnitt (232a) mit zwei, drei, vier oder mehr Abschnitten oder Blättern (232b) aufweist, die von letzteren vorstehen, während die besagte Innenstelle (228, 429) stattdessen eine zentrale Durchgangsöffnung (227) *'*mit zwei, drei, vier oder mehr Schlitzen (240a) aufweist, die in Bezug auf die zentrale Durchgangsöffnung (227) vertieft sind und winkelmäßig mit dem gleichen Winkel oder Abstand der vorstehenden Abschnitte oder Blätter (232b) beabstandet sind.

13. Zahnimplantat nach irgendeinem der vorangehenden Ansprüche, umfassend Kopplungsmittel (237) zwischen dem besagten zweiten Abschnitt oder der besagten zweiten Kopplungskomponente (230) des besagten Verbindungselements (226, 426) und dem besagten Abutment (203, 403).

14. Zahnimplantat nach dem vorangehenden Anspruch, worin das besagte Kopplungsmittel (237) einen Außengewindeabschnitt (238), der sich entlang des besagten zweiten Kopplungsabschnitts (230, 430) des besagten Verbindungselements (226, 426) erstreckt, und einen entsprechenden Innengewindeabschnitt (239), der sich innerhalb des besagten Abutments (203, 403) erstreckt, umfasst.

15. Zahnimplantat nach irgendeinem der vorangehenden Ansprüche, worin das besagte das Stützelement (212) eine Konfiguration mit einer kegelstumpfförmigen Form hat und einen inneren Hohlraum (214) aufweist, der als Teil einer Kugel mit einem Durchmesser gleich oder im Wesentlichen gleich dem des besagten Kopfabschnitts (208) geformt ist.

## Revendications

1. Implant dentaire (200, 400, 500) comprenant un corps d'ancrage (202), comprenant une tige (205, 405, 505) portant un fil (207, 407) engageable dans un site mandibulaire ou maxillaire, un pilier (203, 403, 503) auquel une couronne dentaire est connectable, dans lequel ledit corps d'ancrage (202, 402, 502) et ledit pilier (203, 403) sont reliés chirurgicalement l'un à l'autre au moyen d'une connexion sphérique, **caractérisé en ce que** ledit corps d'ancrage (202, 402, 502) comprend une portion de la tête (208, 408, 508) portant sur son sommet un site interne (228, 428) accessible par une ouverture centrale traversante (227) pour loger dans ledit site interne (228, 428) un élément de connexion (226, 426) de l'implant (200, 400, 500) capable de relier ledit pilier (203, 403, 503) audit corps d'ancrage (202, 402, 502).

2. Implant dentaire selon la revendication 1, dans lequel ladite portion de tête (208, 408) est intégralement réalisée avec ladite tige (205, 405).

3. Implant dentaire selon la revendication 1 ou 2, dans lequel ledit corps d'ancrage (202, 402) présente une portion de connexion entre ladite portion de la tête (208, 408) et ladite tige (205, 405), configurée comme une surface continue, dépourvue de bords.

4. Implant dentaire selon la revendication 1, 2 ou 3, dans lequel ledit pilier (203, 403) comprend un élément de support (212, 412) qui possède, à une extrémité, une cavité interne (214, 414) en forme de partie de sphère d'un rayon égal ou sensiblement égal à celui de ladite portion de la tête (208, 408) accessible de l'extérieur par une ouverture circulaire inférieure (236).

5. Implant dentaire selon la revendication précédente, dans lequel ledit élément de support (212, 412) présente une ouverture centrale (219) qui se prolonge à travers ledit élément de support (212, 412) saisissant ladite cavité interne (214, 414).

6. Implant dentaire selon l'une quelconque des revendications précédentes, dans lequel ladite ouverture centrale traversante (227) est circulaire ou sensiblement circulaire et s'engage dans ledit site interne (228).

7. Implant dentaire selon l'une quelconque des revendications précédentes, dans lequel ledit site interne (228) présente au moins une protubérance (228') qui fait saillie à l'intérieur de celui-ci, capable d'appuyer contre une première portion de couplage (229) dudit élément de connexion (226), pour empêcher la rotation de ladite première portion de couplage (229) autour dudit axe longitudinal (206).

8. Implant dentaire selon l'une quelconque des revendications précédentes, dans lequel ledit corps d'ancrage (202, 402) comprend une fente profilée (209, 409) qui s'étend au moins partiellement le long de ladite tige (205, 405) et est accessible de l'extérieur dudit corps d'ancrage (202, 402) à travers ladite ouverture centrale (227) et ledit site interne (228, 428) .

9. Implant dentaire selon l'une quelconque des revendications précédentes, dans lequel ledit élément de connexion (226, 426) comprend une première portion ou composant de couplage (229, 429), sélectivement engageable dans ledit site interne (228, 428), une deuxième portion ou composant de couplage (230, 430) connectable audit pilier (203, 403) et en voulant une portion centrale (231) se connectant entre ladite première portion de couplage (229) et ladite deuxième portion de couplage (230).

10. Implant dentaire selon la revendication précédente, dans lequel ladite première portion ou composant de couplage (229, 429) a la forme d'un segment sphérique (232) adapté pour engager un élargissement (240) réalisé dans ladite ouverture centrale (227), pour accéder audit site interne (228, 428).

11. Implant dentaire selon la revendication précédente, dans lequel ledit segment sphérique (232) présente une forme discoïde ou sensiblement discoïdale et présente une section transversale complémentaire audit élargissement (240).

12. Implant dentaire selon la revendication 9, dans lequel ledit élément de connexion (226, 426) présente une première portion ou composant de couplage (229, 429) avec une section centrale (232a) à deux, trois, quatre ou plusieurs sections ou pétales en saillie (232b) dépassant de ce dernier, tandis que ledit site interne (228, 429) présente à la place une ouverture centrale traversante (227) et deux, trois, quatre fentes ou plus (240a) en creux par rapport à l'ouverture centrale (227) et espacées angulairement du même angle ou de la même distance que les sections ou pétales en saillie (232b).

13. Implant dentaire selon l'une quelconque des revendications précédentes, comprenant des moyens de couplage (237) entre ladite deuxième portion ou composant de couplage (230) dudit élément de connexion (226, 426) et ledit pilier (203, 403).

14. Implant dentaire selon la revendication précédente, dans lequel ledit moyen de couplage (237) comprend une portion filetée externe (238) qui s'étend le long de ladite deuxième portion de couplage (230, 430) dudit élément de connexion (226, 426) et une portion filetée interne correspondante (239) qui se prolonge à l'intérieur dudit pilier (203, 403).

15. Implant dentaire selon l'une quelconque des revendications précédentes, dans lequel ledit élément de support (212) présente une configuration de forme conique tronquée et présente une cavité interne (214) en forme de partie d'une sphère d'un diamètre égal ou sensiblement égal à celui de ladite portion de la tête (208) .
